# EUROPÄISCHE PATENTSCHRIFT

(11) **EP 1 353 248 B1**
(45) Veröffentlichungstag und Bekanntmachung des Hinweises auf die Patenterteilung: **05.07.2006**
(21) Anmeldenummer: 03007268.0
(22) Anmeldetag: 31.03.2003
(51) Int. Cl.: G05B 19/05, G05B 19/042

(54) **Speicherprogrammierbare Steuerung (SPS) mit konfigurierbarer Schnittstelle sowie konfigurierbare Schaltung für eine speicherprogrammierbare Steuerung**
Programmable logic controller (PLC) with configurable interface and configurable circuit for a programmable logic controller
Automate programmable industriel avec une interface configurable et circuit configurable pour un automate programmable industriel

(30) Priorität: 10.04.2002 DE 20205551 U
(43) Veröffentlichungstag der Anmeldung: 15.10.2003
(73) Patentinhaber: SIEMENS AKTIENGESELLSCHAFT, 80333 München (DE)
(72) Erfinder: Stoll, Jürgen, 90768 Fürth (DE)

(56) Entgegenhaltungen:
- EP-A- 0 499 695
- EP-A- 0 620 510
- DE-A- 19 700 586

## Beschreibung

Die Erfindung betrifft ein elektrisches Gerät, insbesondere eine speicherprogrammierbare Steuerung, mit den Merkmalen des Oberbegriffs des Patentanspruchs 1. Ferner betrifft die Erfindung eine konfigurierbare Schaltung für ein derartiges elektrisches Gerät.

Als Stand der Technik ist aus der EP 0 620 510 A1 ein elektrisches Gerät mit konfigurierbarer Schnittstelle bekannt, bei der über die Konfiguration einer universellen Schnittstelle unterschiedliche Schnittstellen mit einer einzigen Anschaltung realisiert werden können. Das beschriebene elektrische Gerät beschreibt dabei die Konfiguration einer digitalen Schnittstelle.

Der Erfindung liegt die Aufgabe zugrunde, ein elektrisches Gerät mit einer konfigurierbaren Schnittstelle anzubieten, wobei sich eine Vielzahl von Konfigurationsmöglichkeiten ergeben sollen. Ferner soll eine konfigurierbare Schaltung für ein elektrisches Gerät mit einer besonders vielseitig konfigurierbaren Schnittstelle angeboten werden.

Das erfindungsgemäße elektrische Gerät besitzt eine konfigurierbare Schaltung zur Konfiguration von Elementen, insbesondere mindestens einer weiteren Schnittstelle zum Senden und/oder Empfangen von analogen Signalen, zur eigenen Konfiguration, zur Konfiguration mindestens einer Schnittstelle zu einem Systembus des elektrischen Geräts und/oder zur Konfiguration mindestens einer weiteren signalverarbeitenden Intelligenz, z.B. eines Mikroprozessors. Damit besitzt das erfindungsgemäße elektrische Gerät eine in besonders weiten Grenzen und mit besonders umfangreichen Möglichkeiten konfigurierbare Schaltung, die somit besonders einfach an unterschiedlichste kundenindividuelle Funktionsanforderungen angepaßt werden kann.

Vorteilhafterweise ist die konfigurierbare Schaltung als softwarekonfigurierbar ausgebildet, um auf einfachem Wege z.B. über den Systembus aktuelle Programmversionen zur Konfiguration der konfigurierbaren Schaltung laden zu können.

Vorteilhafterweise besitzt der integrierte Schaltkreis mindestens ein Register und/oder mindestens ein DPRAM zur Abspeicherung mindestens eines Konfigurationsdatensatzes z.B. für eines der genannten konfigurierbaren Elemente. Das Register und das DPRAM können z.B. über den Systembus eingelesene Konfigurationsdatensätze zur Konfiguration des FPGA oder eines dem FPGA zugeordneten Speichers, insbesondere eines EEPROMS, besitzen. Das FPGA liest dabei beim Hochfahren den mit der jeweiligen Programmierung versehenen Speicher und konfiguriert sich dabei selbst.

Die konfigurierbare Schaltung kann als integrierter Schaltkreis, z.B. als FPGA (field programmable gate array) gemäß der EP 0 620 510 A1 ausgebildet sein, der auch die weitere signalverarbeitende Intelligenz und/oder den dem FPGA zugeordneten Speicher umfassen kann.

In einer weiteren vorteilhaften Ausführungsform kann die weitere signalverarbeitende Intelligenz zur Ansteuerung eines A/D-Wandlers und eines D/A-Wandlers dienen. Ferner können der A/D-Wandler und der D/A-Wandler bei entsprechender Konfiguration auch direkt vom FPGA angesteuert werden.

Vorteilhafterweise ist auch die signalverarbeitende Intelligenz in ein integrierten Schaltkreis integriert, und zwar insbesondere gemeinsam mit der konfigurierbaren Schaltung.

Die konfigurierbare Schaltung für ein - wie oben stehendes und nachfolgend beschriebenes - elektrisches Gerät ermöglicht eine besonders freie und kundenindividuelle Programmierung des elektrischen Gerätes. Hierdurch können insbesondere die Schnittstellen der konfigurierbaren Schaltung und damit auch des elektrischen Gerätes besonders flexibel und einfach an unterschiedliche Funktionsanforderungen angepaßt werden.

Die Erfindung ist anhand eines Schaltungsbeispiels in der Zeichnungsfigur näher erläutert.

Die Zeichnungsfigur zeigt einen Schaltungsausschnitt aus einem elektrischen Gerät, z.B. einer speicherprogrammierbaren Steuerung, mit einem Systembus 5, der eine Zentraleinheit 1 zur Überwachung nicht näher dargestellter und z.B. aus der EP 0 620 510 A1 bekannter technischer Prozesse P1 und P2 des elektrischen Gerätes aufweist. Die Zentraleinheit 1 besitzt hierzu als signalverarbeitende Intelligenz einen Mikroprozessor 2, der Anwenderprogramme eines Speichers 3 abarbeitet. Durch eine Busanschaltung 4 besteht eine Verbindung über den Systembus 5 mit einer konventionellen Ein-/Ausgabegruppe 6 mit angeschlossenen und nicht näher dargestellten Aktoren und Sensoren zur Steuerung eines Prozesses P1.

Ferner wird über den System-Bus 5 zwischen der Zentraleinheit 1 und der konfigurierbaren Schaltung 7 eine Verbindung hergestellt. Die konfigurierbare Schaltung 7 kann als FPGA ausgestaltet sein, ist im Gegensatz zur Eingabe-/Ausgabebaugruppe 6 als intelligente Baugruppe ausgebildet und besitzt im wesentlichen kundenindividuell programmierbare analoge Schnittstellen, nämlich einen D/A-Wandler 13 und einen A/D-Wandler 14, sowie eine digitale Schnittstelle 15.

Die konfigurierbare Schaltung 7 kann an sich bekannte Register und/oder Speicher, insbesondere DPRAM, zur Abspeicherung von Konfigurationsdatensätzen aufweisen (nicht näher abgebildet).

Durch Auslesen eines Speicher 10, z.B. eines EEPROM, der konfigurierbaren Schaltung 7 kann diese sich beim eigenen Hochfahren oder im laufenden Betrieb hinsichtlich sämtlicher Parameter selbst konfigurieren. Der Speicher 10 kann in die konfigurierbare Schaltung 7 integriert sein (nicht abgebildet).

Der Inhalt des Speichers 10 kann durch Herunterladen über den Systembus 5 aktualisiert und kundenindividuell konfiguriert werden. Hierdurch können jeweils geänderte Konfigurationen der konfigurierbaren Schaltung 7 erreicht und damit unterschiedliche und gewünschte Ausgestaltungen (z.B. Anzahl der Kanäle, Abtastmodus etc.) der analogen Schnittstellen (D/A-Wandler 13 und A/D-Wandler 14) realisiert werden.

Auch die Schnittstelle 16 zwischen Systembus 5 und konfigurierbarer Schaltung 7 kann von letzterer z.B. hinsichtlich sämtlicher Schnittstellenparameter (z.B. Reaktionszeit, Busbreite, Adressaufteilung, Interruptgenerierung, Haltesignale etc.) frei konfiguriert werden.

Ferner kann die konfigurierbare Schaltung 7 eine vorverarbeitende Intelligenz 8, z.B. einen Mikroprozessor besitzen, der ebenfalls einen Programmspeicher 9 aufweisen kann, in dem wiederum kundenindividuelle Konfigurationsdatensätze zur Konfiguration der Intelligenz 8 vorliegen können.

Über interne Busverbindungen 11, 12 (z.B. einen parallelen Bus und einen seriellen SSI-Bus) stehen die konfigurierbare Schaltung 7, der Speicher 9, die Intelligenz 8 und die analogen Schnittstellen D/A-Wandler 13 und A/D-Wandler 14 in Verbindung.

Das erfindungsgemäße Gerät kann über die in der EP 0 620 510 A1 genannten Anwendungen hinaus zur Steuerung verschiedenster technischer Prozesse P1 und P2 verwendet werden.

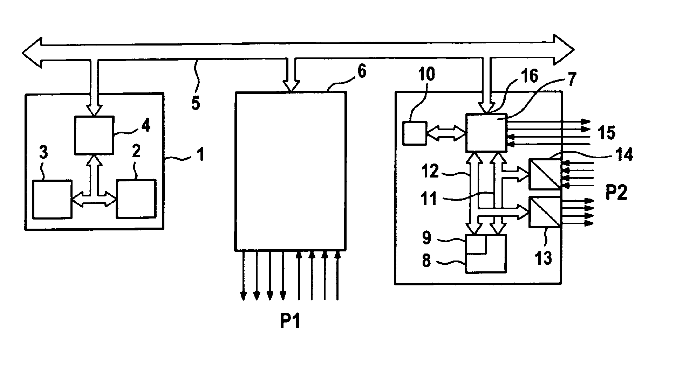

## Patentansprüche

1. Elektrisches Gerät, insbesondere speicherprogrammierbare Steuerung, mit einer signalverarbeitenden Intelligenz (2), z.B. einem Mikroprozessor, und mindestens einer über einen Systembus (5) mit der signalverarbeitenden Intelligenz (2) verbundenen Schnittstelle (15) zum Senden und/oder Empfangen von digitalen Signalen und zum Anschluss externer Leitungen, wobei zwischen der Intelligenz (2) und der Schnittstelle (15) eine konfigurierbare Schaltung (7) zur Konfiguration der Schnittstelle (15) angeordnet ist,
**dadurch gekennzeichnet, dass** die konfigurierbare Schaltung (7) zur Konfiguration mindestens einer weiteren Schnittstelle (13, 14) zum Senden und/oder Empfangen von analogen Signalen, zur eigenen Konfiguration, zur Konfiguration mindestens einer Schnittstelle (16) zum Systembus und/oder zur Konfiguration mindestens einer weiteren signalverarbeitenden Intelligenz (8), z.B. eines Mikroprozessors, ausgebildet ist.

2. Elektrisches Gerät nach Anspruch 1,
**dadurch gekennzeichnet, dass** die konfigurierbare Schaltung (7) als softwarekonfigurierbare Schaltung ausgebildet ist.

3. Elektrisches Gerät nach Anspruch 1 oder 2,
**dadurch gekennzeichnet, dass** die konfigurierbare Schaltung (7) in einen integrierten Schaltkreis integriert ist.

4. Elektrisches Gerät nach Anspruch 3,
**dadurch gekennzeichnet, dass** der integrierte Schaltkreis als FPGA (field programmable gate array) ausgebildet ist.

5. Elektrisches Gerät nach Anspruch 4,
**dadurch gekennzeichnet, dass** das FPGA mindestens ein Register zur Abspeicherung mindestens eines Konfigurationsdatensatzes aufweist.

6. Elektrisches Gerät nach Anspruch 4 oder 5,
**dadurch gekennzeichnet, dass** das FPGA mindestens einen Speicher, insbesondere einen DPRAM, zur Abspeicherung mindestens eines Konfigurationsdatensatzes aufweist.

7. Elektrisches Gerät nach einem der Ansprüche 4 bis 6,
**dadurch gekennzeichnet, dass** mindestens ein Speicher (10), insbesondere einen EEPROM, zur Abspeicherung mindestens eines Konfigurationsdatensatzes zur eigenen Konfiguration des FPGA vorgesehen ist.

8. Elektrisches Gerät nach einem der vorhergehenden Ansprüche,
**dadurch gekennzeichnet, dass** die signalverarbeitende Intelligenz (8) zur Ansteuerung eines D/A-Wandlers (13) und eines A/D- Wandlers (14) dient.

9. Elektrisches Gerät nach einem der vorhergehenden Ansprüche,
**dadurch gekennzeichnet, dass** die signalverarbeitende Intelligenz (8) in einen integrierten Schaltkreis integriert ist.

10. Elektrisches Gerät nach Anspruch 9,
**dadurch gekennzeichnet, dass** die konfigurierbare Schaltung (7) und die signalverarbeitende Intelligenz (8) in denselben integrierten Schaltkreis integriert sind.

## Claims

1. Electrical device, in particular a programmable logic controller, with a signal-processing intelligence (2), e.g. a microprocessor, and at least one interface (15) connected via a system bus (5) to the signal-processing intelligence (2) for sending and/or receiving digital signals and for the connection of external lines, with a configurable circuit (7) disposed between the intelligence (2) and the interface (15) to configure the interface (15),
**characterised in that** the configurable circuit (7) is configured to configure at least one further interface (13, 14), for sending and/or receiving analogue signals, for self-configuration, to configure at least one interface (16) with the system bus and/or to configure at least one further signal-processing intelligence (8), e.g. a microprocessor.

2. Electrical device according to claim 1,
**characterised in that** the configurable circuit (7) is configured as a software-configurable circuit.

3. Electrical device according to claim 1 or 2,
**characterised in that** the configurable circuit (7) is integrated in an integrated circuit.

4. Electrical device according to claim 3,
**characterised in that** the integrated circuit is configured as an FPGA (field programmable gate array).

5. Electrical device according to claim 4,
**characterised in that** the FPGA has at least one register for storing at least one configuration data record.

6. Electrical device according to claim 4 or 5,
**characterised in that** the FPGA has at least one memory, in particular a DPRAM, for storing at least one configuration data record.

7. Electrical device according to one of claims 4 to 6,
**characterised in that** at least one memory (10), in particular and EEPROM, is provided for storing at least one configuration data record for self-configuration of the FPGA.

8. Electrical device according to one of the preceding claims,
**characterised in that** the signal-processing intelligence (8) serves to activate a D/A converter (13) and an A/D converter (14).

9. Electrical device according to one of the preceding claims,
**characterised in that** the signal-processing intelligence (8) is integrated in an integrated circuit.

10. Electrical device according to claim 9,
**characterised in that** the configurable circuit (7) and the signal-processing intelligence (8) are integrated in the same integrated circuit.

## Revendications

1. Appareil électrique, notamment commande par programme enregistré, avec une intelligence (2) traitant des signaux, par exemple un microprocesseur, et avec au moins une interface (15) qui est reliée par l'intermédiaire d'un bus de système (5) à l'intelligence (2) traitant des signaux et qui est destinée à émettre et/ou recevoir des signaux numériques et à raccorder des lignes externes, un circuit configurable (7) étant placé entre l'intelligence (2) et l'interface (15) pour la configuration de l'interface (15),
**caractérisé par le fait que** le circuit configurable (7) est conçu pour la configuration d'au moins une autre interface (13, 14) destinée à l'émission et/ou à la réception de signaux analogiques, pour sa propre configuration, pour la configuration d'au moins une interface (16) vers le bus de système et/ou pour la configuration d'au moins une autre intelligence (8) traitant des signaux, par exemple un microprocesseur.

2. Appareil électrique selon la revendication 1,
**caractérisé par le fait que** le circuit configurable (7) est conçu comme un circuit configurable par logiciel.

3. Appareil électrique selon la revendication 1 ou 2,
**caractérisé par le fait que** le circuit configurable (7) est intégré dans un circuit intégré.

4. Appareil électrique selon la revendication 3,
**caractérisé par le fait que** le circuit intégré est conçu comme un FPGA (field programmable gate array).

5. Appareil électrique selon la revendication 4,
**caractérisé par le fait que** le FPGA comporte au moins un registre pour la mémorisation d'au moins un ensemble de données de configuration.

6. Appareil électrique selon la revendication 4 ou 5,
**caractérisé par le fait que** le FPGA comporte au moins une mémoire, notamment une DPRAM, pour la mémorisation d'au moins un ensemble de données de configuration.

7. Appareil électrique selon l'une des revendications 4 à 6,
**caractérisé par le fait qu'**il est prévu au moins une mémoire (10), notamment une EEPROM, pour la mémorisation d'au moins un ensemble de données de configuration pour la configuration propre du FPGA.

8. Appareil électrique selon l'une des revendications précédentes,
**caractérisé par le fait que** l'intelligence (8) traitant des signaux sert à la commande d'un convertisseur numérique / analogique D/A (13) et d'un convertisseur analogique / numérique A/D (14).

9. Appareil électrique selon l'une des revendications précédentes,
**caractérisé par le fait que** l'intelligence (8) traitant des signaux est intégrée dans un circuit intégré.

10. Appareil électrique selon la revendication 9,
**caractérisé par le fait que** le circuit configurable (7) et l'intelligence (8) traitant des signaux sont intégrés dans le même circuit intégré.
